# DEMANDE DE BREVET EUROPEEN

(11) **EP 0 957 436 A2**
(43) Date de publication de la demande: **17.11.1999**
(21) Numéro de dépôt: 99401193.0
(22) Date de dépôt: 17.05.1999
(51) Int. Cl.: G06F 15/80

(54) **Procédé de commande d'un réseau de processeurs**

(30) Priorité: 15.05.1998 FR 9806198
(71) Demandeur: Delegation Generale Pour L'Armement, 00457 Armées (FR)
(72) Inventeur: Bernard, Thierry, 91370 Verrieres-le-Buisson (FR); Paillet, Fabrice, 91700 Villiers-sur-Orge (FR); Mercier, Damien, 75013 Paris (FR)

(57) **Abrégé**

La présente invention concerne le domaine des équipements de traitement de données à commandes communes et a plus particulièrement pour objet un procédé de commande de processeurs interconnectés entre eux, disposés sur ou à proximité de tout ou partie des points d'intersection entre un ensemble de N droites parallèles appelées colonnes C(1) à C(N) et un ensemble de M droites parallèles appelées lignes L(1) à L(N), lignes et colonnes formant un angle non nul entre elles, ces processeurs, tous identiques en fonctionnalité, procédé caractérisé en ce qu'il comporte une étape consistant à commander simultanément à l'aide d'un signal de commande les processeurs de x colonnes non-adjacentes et/ou de y lignes non-adjacentes, x étant un entier compris entre 1 et (n/2+1) et y un entier compris entre 1 et (m/2+1)

## Description

La présente invention concerne le domaine des équipements de traitement de données à commandes communes et a plus particulièrement pour objet un procédé de commande d'un réseau de processeurs interconnectés, qui permet en particulier une mise en commun des ressources de plusieurs processeurs.

Ce procédé entre dans le cadre des dispositifs électroniques de calcul massivement parallèle implantés sur un circuit intégré monolithique. Ces dispositifs sont notamment bien adaptés au traitement d'images binaires ou en niveaux de gris. L'entrée des données peut se faire sous forme optique, donnant ainsi un capteur de vision intelligent couramment dénommé rétine artificielle.

Une telle rétine artificielle est explicitée par exemple dans le brevet FR2683348. Elle est constituée d'un réseau bidimensionnel périodique de mémorisation et de traitement booléen d'images composées de pixels binaires, dont la maille périodique constitue un processeur booléen associé à au moins un pixel. Ce processeur comporte lui-même au moins un registre à décalage unidirectionnel comprenant au moins trois points mémoires.

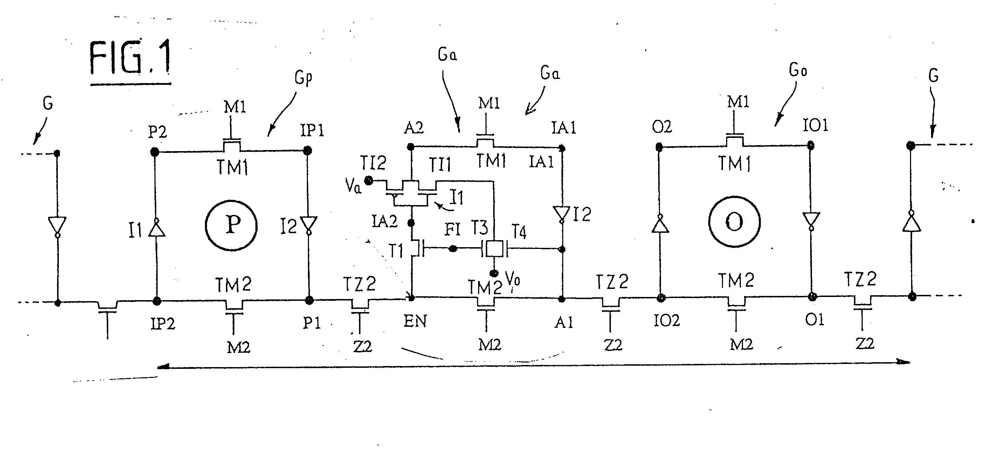

Comme montré sur la figure 1, chaque point mémoire comporte deux inverseurs I2, I1 composés chacun de deux transistors TI1 et TI2. L'entrée de I1 est connectée à la sortie de I2 au travers de moyens de commutation TM2, tandis que la sortie est connectée à l'entrée de I1 au travers d'un moyen de commutation TM1. En outre la sortie des inverseurs I2 des points mémoires respectifs Gp et Ga sont connectés aux points mémoire respectifs Ga et Go au travers de moyens de commutation TZ2.

Un tel processeur permet, par un séquençage utilisant les commandes M1, M2 et Z2 de recopier une information binaire d'un point mémoire appelé source vers un point mémoire appelé destination, seul ce dernier étant alors modifié.

Afin d'obtenir une fonction conjonctive, trois transistors, T1, T3 et T4, sont rajoutés au point mémoire destination Ga et un séquençage utilisant les commandes M1, M2, Z2 et FI est nécessaire, FI étant la commande du transistor T1. Dans la suite les commandes seront appelées des horloges.

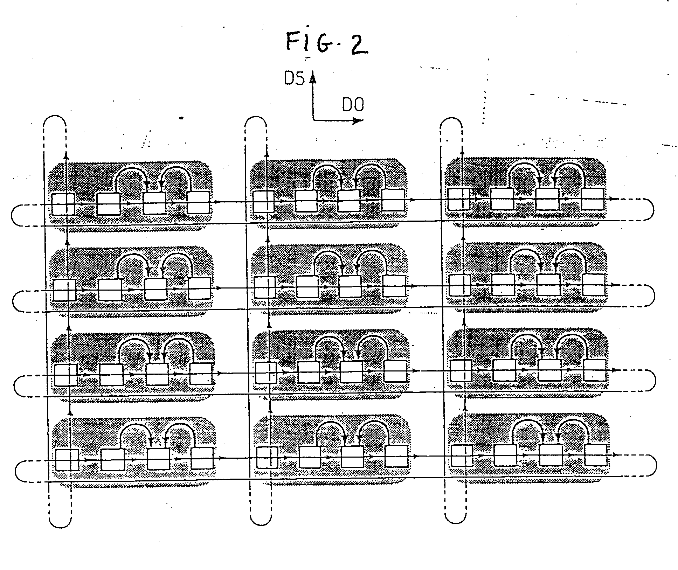

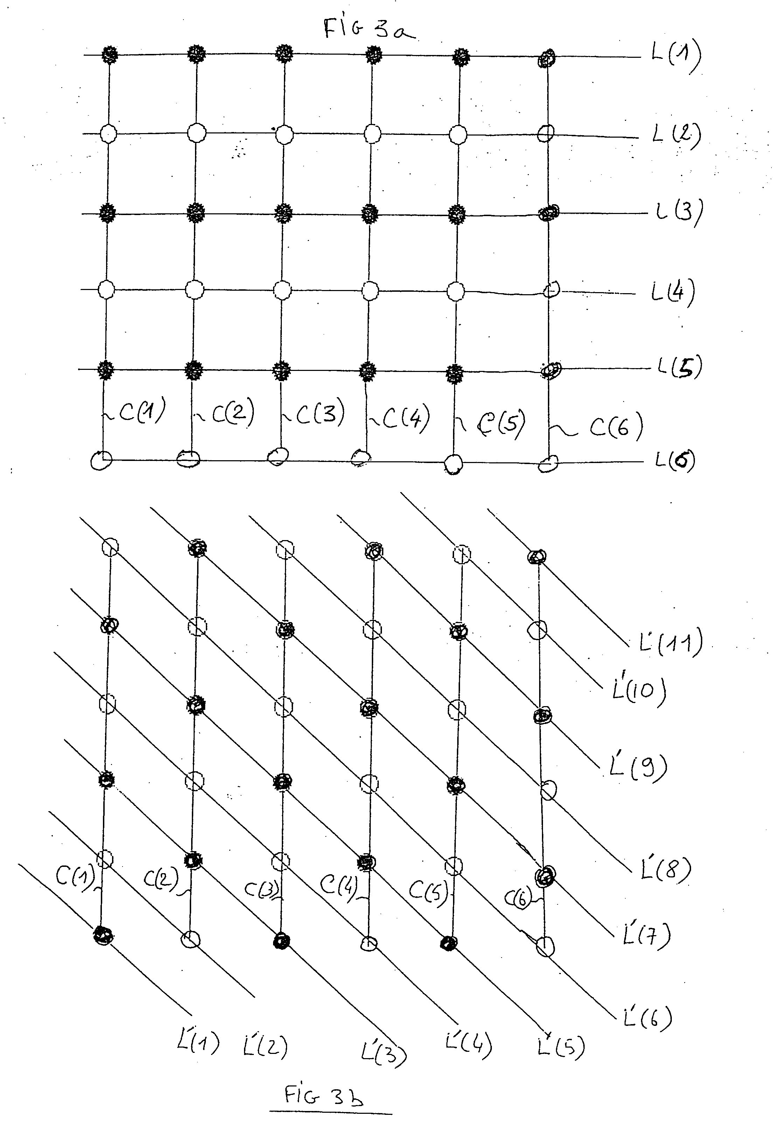

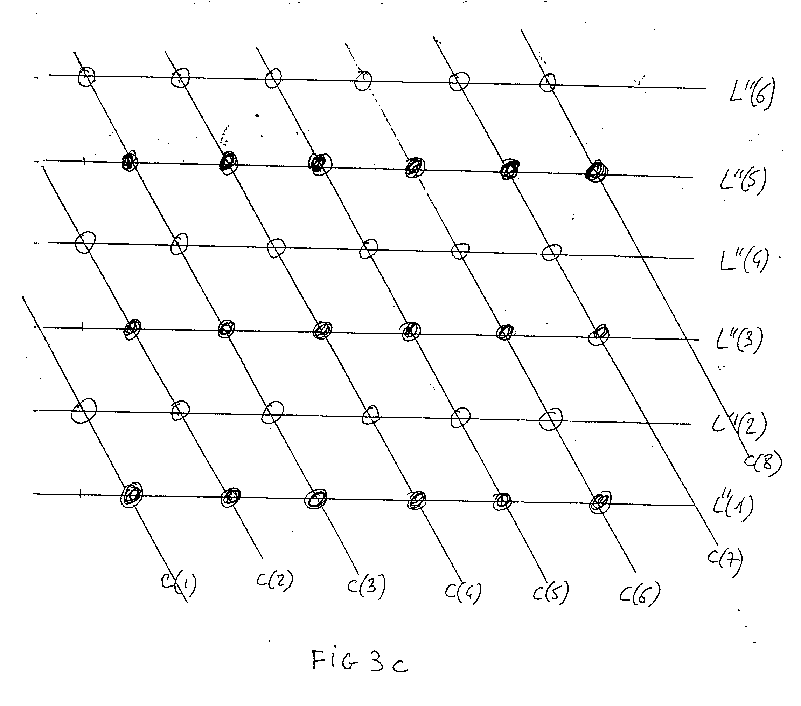

Un exemple d'intégration d'un tel processeur dans le réseau constitutif de la rétine est montré sur la figure 2.

Chaque processeur P comporte quatre points mémoire, à savoir deux points mémoire source, un point mémoire destination et un autre point mémoire. Ces points sont mis en chaîne sur une même rangée dans la direction D0, cette chaîne étant rebouclée sur elle-même à ses bords. Dans la direction D5, les autres points mémoire sont mis en chaîne pour former des registres à décalage rebouclés sur eux-mêmes. Les deux directions de décalage D0 et D5 suffisent pour exécuter les transferts d'information binaire dans toutes les directions.

Comme mentionné précédemment, le séquençage des horloges appliquées au processeur dépend de la nature du calcul à effectuer. Dans le cadre de la rétine décrite dans ledit brevet, tous les processeurs du réseau sont commandés par les mêmes horloges dont les principales sont M1, M2, Z2, FI.

Ceci est obtenu en commandant de l'extérieur du réseau des horloges globales, appelés aussi signaux de commande dans la suite, qui commandent le fonctionnement des processeurs, ces horloges globales étant distribuées de façon indifférenciée à tous les processeurs.

Un tel fonctionnement est connu sous le nom de mode simple instruction multiples données (SIMD), chaque processeur effectuant un traitement sur une donnée qui lui est propre.

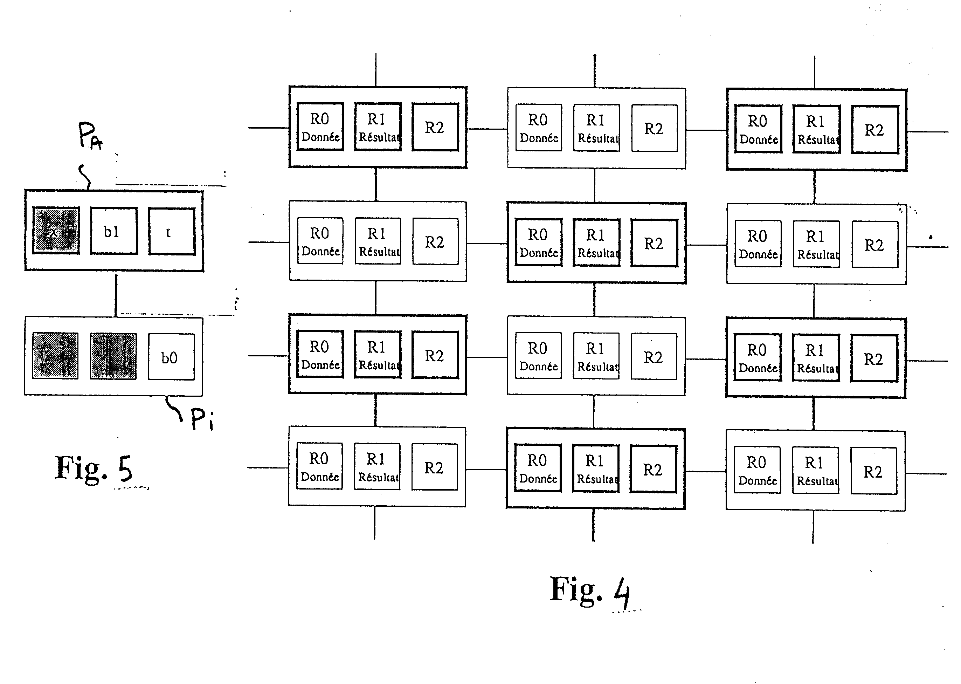

Dans une structure telle que celle décrite dans le brevet FR2683348 fonctionnant en mode SIMD, la mémoire disponible dans chaque processeur élémentaire pour effectuer l'ensemble du traitement sur la donnée est de quelques bits, à savoir, trois bits dans le cas de la figure 1 et 4 bits dans le cas de la figure 2. Or, de nombreux algorithmes sont plus simples à programmer et souvent beaucoup plus efficaces lorsque la mémoire disponible est moins limitée que celle disponible dans chaque processeur élémentaire.

On connaît par ailleurs le brevet WO 90/04235 qui décrit l'utilisation de processeurs grille pour réaliser des opérations bit série fonctionnant aussi en mode SIMD et dont le but est d'accroitre les performances de calcul en conservant une cellule de complexité raisonnable. Pour cela, des connexions sont réalisées d'une part entre processeurs voisins et d'autre part entre processeurs éloignés au moyen de multiplexeurs dont la fonction est d'émuler une matrice formée d'un nombre plus ou moins grand de processeurs afin de l'adapter à la fonction à réaliser.

De plus, le dispositif décrit comporte une commande ALU conditionnelle et un banc de mémoire multiport permettant des lectures et écritures dans un même temps d'horloge.

Le dispositif décrit dans ce brevet présente l'inconvénient de nécessiter une m émoire importante et complexe associée à chaque cellule, de nombreuses connexions particulières ainsi que l'utilisation de multiplexeurs, ce qui le rend volumineux et diminue sa fiabilité.

On connaît aussi le brevet EP410435 qui décrit une matrice de processeurs à un bit, chacun de ces processeurs communicant avec ses quatre plus proches voisins, ces processeurs étant commandés en mode SIMD par un contrôleur central. Par ailleurs, une sélection en ligne et colonne permet de ne stocker le résultat d'un calcul qu'en certains endroits de la matrice, par un ET logique entre des horloges de sélection ligne et colonne.

Le dispositif décrit dans ce brevet présente l'inconvénient de nécessiter autant de processeurs et de moyens de calcul que de bits de mémoire ce qui rend le dispositif volumineux, et décrit l'utilisation d'une méthode complexe de répartition particulière des résultats intermédiaires de calcul. De plus, le nombre relativement faible de cellules sélectionnées à chaque instant est représentatif du gaspillage des ressources de calcul.

Le but de l'invention est de remédier aux inconvénients des dispositifs précité s en augmentant la mémoire disponible pour certains calculs sans accroître la taille du réseau, et sans nécessiter l'utilisation d'une méthode complexe de répartition des résultats intermédiaires.

L'invention consiste à dégénérer le mode de commande SIMD afin de pouvoir mettre en commun des ressources de mémoire et/ou de calcul de chacun des processeurs .

Pour cela, un procédé de commande de processeurs apte à permettre la mise en commun des ressources de mémoire et/ou de calcul de processeurs disposant chacun d'une mémoire locale d'au moins deux bits et interconnectés entre eux, disposés sur ou à proximité de tout ou partie des points d'intersection entre un ensemble de N droites parallèles appelées colonnes C(1) à C(N) et un ensemble de M droites parallèles appelées lignes L(1) à L(M), lignes et colonnes formant un angle non nul entre elles, ces processeurs, tous identiques en fonctionnalité, procédé caractérisé en ce qu'il comporte une étape consistant à commander simultanément à l'aide d'un signal de commande les processeurs de x colonnes non-adjacentes et/ou de y lignes non-adjacentes, x étant un entier compris entre 1 et (N/2+1) et y un entier compris entre 1 et (M/2+1).

Selon une autre caractéristique, l'invention consiste en un procédé apte à permettre la mise en commun des ressources de mémoire et/ou de calcul de processeurs disposant chacun d'une mémoire locale d'au moins deux bits et interconnectés entre eux, disposés sur ou à proximité de tout ou partie des points d'intersection entre un ensemble de N droites parallèles appelées colonnes C(1) à C(N) et un ensemble de M droites parallèles appelées lignes L(1) à L(M), lignes et colonnes formant un angle non nul entre elles, ces processeurs, tous identiques en fonctionnalité, procédé caractérisé en ce qu'il comporte une étape consistant à commander simultanément à l'aide d'un signal de commande tous les processeurs excepté ceux de x colonnes non-adjacentes et/ou de y lignes non-adjacentes, x é tant un entier compris entre 1 et (N/2+1) et y un entier compris entre 1 et (M/2+1).

Selon une autre caractéristique, les processeurs sont disposés selon un réseau bidimensionnel périodique.

Selon une autre caractéristique, le procédé comporte de plus au moins une étape supplémentaire consistant à commander simultanément, à l'aide dudit premier signal de commande ou d'un second signal de commande des processeurs d'au plus x1 lignes non adjacentes et/ou au plus y1 colonnes non adjacentes, x1 étant un nombre entier compris entre 1 et (N/2+1) et y1 un nombre entier compris entre 1 et (M/2+1), ces processeurs étant différents de ceux commandés lors de la première étape.

Selon une caractéristique particulière, le signal de commande de chaque processeur est issu de la combinaison logique de deux signaux de commande ou plus, l'un au moins étant commun à x2 colonnes non-adjacentes, et le ou les autres étant commun à y2 lignes non-adjacentes, x2 étant un entier compris entre 1 et (N/2+1) et y2 un entier compris entre 1 et (M/2+1).

Selon une autre caractéristique, le procédé comporte une étape consistant à commander le transfert d'une valeur binaire entre un processeur et un autre qui lui est adjacent.

Selon une caractéristique additionnelle, un procédé selon comporte une ou plusieurs étapes successives de commande simultanée d'une famille de lignes L(bl x kl + rl), paramétrée par kl, bl étant un entier fixe compris entre 2 et (M/2+1), kl étant un nombre entier compris entre 0 et le quotient de la division euclidienne de M par bl et rl étant un entier compris entre 1 et bl pouvant varier d'une étape de calcul à la suivante, et/ou d'une famille de colonnes C(bc x kc + rc), paramétrée par kc, bc étant un entier fixe compris entre 2 et (N/2+1), kc étant un nombre entier compris entre 0 et le quotient de la division euclidienne de N par bc et rc étant un entier compris entre 1 et bc pouvant varier d'une étape de calcul à la suivante.

Selon une autre caractéristique, le procédé est appliqué à des blocs de processeurs, ces blocs constituant un pavage du réseau de processeurs, ces blocs pouvant être de taille 1 x bl, bc x 1 ou bc x bl. Un calcul peut être effectué par un processeur par bloc ou par plusieurs processeurs de chacun des blocs.

Selon une caractéristique additionnelle, il comporte une étape consistant à utiliser simultanément pour chaque bloc et au cours d'une même étape de calcul les fonctionnalités de plusieurs processeurs.

Un procédé selon l'invention peut être avantageusement appliqué à un réseau bidimensionnel périodique de mémorisation et de traitement d'images composées de pixels binaires, dont la maille périodique constitue un processeur booléen associé à au moins un pixel, ce processeur comportant lui-même au moins un registre à décalage unidirectionnel comprenant au moins trois points mémoires.

D'autres avantages et caractéristiques apparaîtront dans la description de modes particuliers de réalisation de l'invention, notamment dans le cadre d'une rétine artificielle, au regard des figures annexées parmi lesquelles :
- les figures 3a à 3c présentent des exemples de définition d'un réseau bidimensionnel périodique.
- les figures 4 et 5 présentent des processeurs interconnectés comportant trois bits de mémoire.

Les figures 3a à 3c présentent un exemple de réseau bidimensionnel périodique comportant 36 processeurs P interconnectés tous identiques en fonctionnalité, ces processeurs et interconnexions pouvant être du type de ceux décrits dans le brevet FR2683348 et/ou dans la demande de brevet FR9804252 déposée au nom du demandeur.

La position des processeurs dans le réseau périodique bidimensionnel peut être définie de multiples manières. Ainsi, dans le cadre de la figure 3a, les processeurs sont disposés aux intersections des colonnes parallèles et équidistantes C(1) à C(6) et des N droites parallèles et équidistantes L(1) à L(6), les colonnes et les droites faisant entre elles un angle de Π2 radian.

Dans le cadre de la figure 3b, les processeurs sont disposés aux intersections des colonnes parallèles et équidistantes C(1) à C(6) et des N' droites parallèles et équidistantes L'(1) à L'(11), les colonnes et les droites faisant entre elles un angle de Π/4 radian.

Dans le cadre de la figure 3c, les processeurs sont disposés aux intersections des colonnes parallèles et équidistantes C(1) à C(8) et des N"droites parallèles et équidistantes L"(1) à L"(6), les colonnes et les droites faisant entre elles un angle de Π/6 radian.

Les valeurs respectives de N, N' et N" sont respectivement 6, 11 et 6, le nombre de colonnes étant égal à 8 dans ce dernier cas.

Ces différentes définitions de la position des processeurs dans le réseau sont très importantes dans le cadre de l'invention. En effet, cette dernière consiste en une étape de commande simultanément et à l'aide d'un même signal de commande les processeurs d'au plus x lignes non adjacentes et/ou au plus y colonnes non adjacentes, x étant un nombre entier au moins égal à 1 et inférieur ou égal à (N/2+1) et y un nombre entier au moins égal à 1 et inférieur ou égal à (M/2+1), le nombre de processeurs ainsi commandés étant inférieur ou égal à (1/2*N*M+1).

Or, appliquée à l'exemple des figures 3a à 3c et dans le cas de la commande des processeurs d'au plus x lignes non adjacentes, en l'occurrence ceux situés sur les lignes à indice impair (L(1), L(3), L(5)...), les processeurs commandés ont été représentés, sur chacunes des figures par des disques noirs, les processeurs non commandés étant représentés par des cercles. Dans les trois cas des figures 3a et 3c le nombre de lignes de processeurs commandés a été choisi égal à N/2 soit 3 tandis qu'il a été choisi égal à la partie entière de N/2+1 dans le cas de la figure 3b, soit 6.

Dans une étape complémentaire, le même signal de commande ou un second peut commander les processeurs situés sur les lignes à indice pair (L(2), L(4),...), les processeurs commandés étant alors ceux représentés par des cercles, tandis que ceux qui ne sont pas commandés sont ceux qui sont représentés par des disques noirs.

Les exemples des figures 3a à 3c présentent ainsi un mode de commande d'un réseau bidimensionnel périodique qui permet de travailler avec une sous-résolution d'un facteur deux. Les variantes des figures 3b et 3c conservent l'isotropie la meilleure possible.

Lors d'un calcul ainsi sous-résolu, les processeurs des pixels actifs peuvent utiliser comme stockage temporaire tout ou partie de la mémoire du ou de leurs voisins qui ne sont pas commandés.

Ce type de commande, que l'on peut qualifier de SIMD par bloc de processeurs, permet donc d'effectuer le traitement avec une mémoire accrue pour une ligne sur q de l'ensemble de pixels, donc avec une sous-résolution d'un facteur q (q étant égal à 2 dans les exemples précédents).

On remarque alors que, à condition que chaque processeur dispose d'au moins trois bits de mémoire, il est possible de ne pas modifier deux bits de tous les processeurs du bloc qui ne sont pas commandés. Ces deux bits représentent les images binaires initiales et finales. Dans l'exemple des figures 3a à 3c, et à condition que le transfert entre processeurs voisins soit commandé par une des horloges dégénérées {ceci n'étant pas restrictif car avec un algorithme de calcul plus compliqué il est possible de conserver des horloges globales pour la commande des communications entre processeurs, les horloges de calcul internes restant cependant dégénérées}, il est possible de stocker des résultats de calcul intermédiaires dans la mémoires des processeurs non commandés à cet instant, et cela, sans détruire les valeurs initiales et finales qu'ils contiennent.

Il est donc possible d'effectuer les q étapes de calcul correspondant à chacun des q processeurs du bloc de façon séquentielle, la seule condition étant de ne détruire ni les données initiales, ni les résultats déjà calculés.

Dans une première étape, le calcul de tous les pixels correspondant aux processeurs représentés par des disques noirs peut se faire en utilisant de façon temporaire la mémoire libre des processeurs représentés par des cercles.

Dans une deuxième étape, le calcul de tous les pixels correspondant aux processeurs représentés par des cercles peut se faire en utilisant de façon temporaire la mémoire libre des processeurs représentés par des disques noirs. Le résultat du calcul est alors à pleine résolution, mais les pixels ont été calculés séparément en disposant de plus de mémoire.

Dans cette méthode où tous les processeurs ont un résultat à la fin du calcul, il s'agit de multi-granularité de calcul.

Un exemple simple permet de montrer le gain de complexité obtenu. On considère ainsi une rétine dans laquelle chaque processeur dispose de trois bits de mémoire, R0, R1 et R2 comme montré sur la figure 4. R0 contient une image binaire, et on souhaite effectuer un traitement tel que R1 contienne finalement 1 si au moins deux points de l'image initiale étaient à un dans le voisinage, et 0 sinon. Le voisinage considéré peut par exemple être l'ensemble des 8 ou des 24 plus proches voisins, mais ce peut être aussi un ensemble beaucoup plus vaste. On considère ici que ce voisinage fait p points.

Pour un calcul purement SIMD, un seul bit de mémoire intermédiaire, en l'occurrence R2 est disponible pour effectuer le calcul, et une des seules méthodes envisageables consiste à tester l'ensemble des dispositions possibles du voisinage. Comme l'on ne souhaite que savoir si deux points au moins sont à un, une légère simplification consiste à ne tester que deux points à chaque étape. Il reste tout de même p (p-1) /2 monômes (nombre de combinaisons de deux points parmi p) à deux termes à calculer en accumulant leur OU dans le bit R1. Ceci représente un total de p^2 -p -1 opérations booléennes.

En revanche, l'utilisation du procédé selon l'invention autorise un regroupement des processeurs par deux, PA et Pi et permet ainsi de disposer du bit R2 du processeur effectuant un calcul et du bit R2 du processeur voisin, par exemple celui du dessous, lors des calculs. Dans un premier temps, on calcule les résultats seulement sur l'ensemble des processeurs situés sur les lignes d'indice impair (L(1), L(3), L(5)...), par le procédé de commande décrit précédemment. Dans une deuxième étape on calcule le résultat pour l'ensemble des processeurs restant c'est-à-dire ceux situés sur les lignes d'indice pair (L(2), L(4), L(6)...). Pour chacune de ces deux étapes, on peut disposer du bit R2 des processeurs Pi qui n'effectuent pas de calcul à cet instant.

Ayant deux bits intermédiaires disponibles, au lieu d'un seul dans le cas d'un mode de commande SIMD, il devient possible d'implanter un compteur en code de Grey saturant, c'est-à-dire un compteur sur deux bits b1 et b0 vérifiant les transitions suivantes :
00 -> 01 -> 11 -> 11 -> 11 ...

Lorsque la valeur z du point (parmi les p points du voisinage considéré) que l'on est en trait d'intégrer dans la somme vaut 1, le compteur avance d'un état. Si z vaut 0, le compteur reste fixe. Tout le voisinage étant parcouru, le bit de poids fort b1 vaut alors 1 si et seulement si le compteur a été incrémenté au moins deux fois.

La séquence suivante permet d'implanter ce compteur (le point signifie le ET logique et le plus signifie OU logique) :
(a) x.b0 -> t puis (b) t+b1 -> b1 puis (c) x+b0 -> b0

Dans laquelle t est un stockage temporaire (R2 de PA par exemple) et b0 est l'autre stockage temporaire R2 du processeur voisin comme présenté sur la figure 5. b1 est le résultat du calcul et peut donc être stocké dans R1. Finalement, pour chacun des p points du voisinage il faut effectuer trois opérations, et il faut faire cette séquence complète sur les processeurs des lignes d'indice impair puis sur ceux des lignes d'indice pair. En définitive, le nombre total d'opérations est alors 6 p pour exactement le même résultat que ci-dessus.

Pour p=24, ce qui correspond à un voisinage 5x5, la méthode sans multi-granularité conduit ainsi à 551 opérations, et l'on tombe à 144 opérations avec un calcul par blocs de deux processeurs.

Il est possible de combiner les deux techniques afin d'exécuter un calcul en sous-résolution avec encore plus de mémoire, donc avec un grain de calcul plus gros que le pixel sous-résolu.

Les exemples précédents montrent une dégénérescence sur les lignes. Cette technique peut s'appliquer bien sûr sur les colonnes, et permet même, par un découpage des horloges en lignes et en colonnes et une commande différenciée, de dégénérer des blocs de taille N x M.

Il est évident que de nombreuses modifications peuvent être apportées au mode de réalisation présenté. Ainsi, comme la dégénérescence des horloges permet la multi-granularité et la multi-résolution, il est possible d'utiliser les horloges de calcul de tous les processeurs du bloc (et non seulement d'un seul). Ceci conduit à un bloc-processeur formé de q processeurs élémentaires pouvant travailler en parallèle et se comportant comme autant d'unités de calcul indépendantes, au prix toutefois d'une certaine complexité de programmation due au déplacement des données nécessaire pour utiliser au mieux les ressources disponibles et aux diverses contraintes de séquencement des commandes.

Dans l'exemple précédent, les calculs notés(b) et (c) peuvent être effectués simultanément, chacun sur un des deux processeurs du bloc. A cet effet, il suffit de décaler le plan R0 (contenant x) vers le bas, et les données nécessaires aux deux calculs se trouvent chacune dans un processeur. Le coût total se réduit dans ce cas à 4 p opérations séquentielles.

## Revendications

1. Procédé apte à permettre la mise en commun des ressources de mémoire et/ou de calcul de processeurs disposant chacun d'une mémoire locale d'au moins deux bits et interconnectés entre eux, disposés sur ou à proximité de tout ou partie des points d'intersection entre un ensemble de N droites parallèles appelées colonnes C(1) à C(N) et un ensemble de M droites parallèles appelées lignes L(1) à L(M), lignes et colonnes formant un angle non nul entre elles, ces processeurs, tous identiques en fonctionnalité, procédé caractérisé en ce qu'il comporte une étape consistant à commander simultanément à l'aide d'un signal de commande les processeurs de x colonnes non-adjacentes et/ou de y lignes non-adjacentes, x étant un entier compris entre 1 et (N/2+1) et y un entier compris entre 1 et (M/2+1).

2. Procédé apte à permettre la mise en commun des ressources de mémoire et/ou de calcul de processeurs disposant chacun d'une mémoire locale d'au moins deux bits et interconnectés entre eux, disposés sur ou à proximité de tout ou partie des points d'intersection entre un ensemble de N droites parallèles appelées colonnes C(1) à C(N) et un ensemble de M droites parallèles appelées lignes L(1) à L(M), lignes et colonnes formant un angle non nul entre elles, ces processeurs, tous identiques en fonctionnalité, procédé caractérisé en ce qu'il comporte une étape consistant à commander simultanément à l'aide d'un signal de commande tous les processeurs excepté ceux de x colonnes non-adjacentes et/ou de y lignes non-adjacentes, x étant un entier compris entre 1 et (N/2+1) et y un entier compris entre 1 et (M/2+1).

3. Procédé selon l'une des revendications 1 et 2, caractérisé en ce que les processeurs sont disposés selon un réseau bidimensionnel périodique.

4. Procédé selon l'une des revendications 1 à 3, caractérisé en ce qu'il comporte de plus au moins une étape supplémentaire consistant à commander simultanément, à l'aide dudit premier signal de commande ou d'un second signal de commande des processeurs d'au plus x1 lignes non adjacentes et/ou au plus y1 colonnes non adjacentes, x1 étant un nombre entier compris entre 1 et (N/2+1) et y1 un nombre entier compris entre 1 et (M/2+1), ces processeurs étant différents de ceux commandés lors de la première étape.

5. Procédé selon l'une des revendications 1 à 4, caractérisé en ce que le signal de commande de chaque processeur est issu de la combinaison logique de deux signaux de commande ou plus, l'un au moins étant commun à x2 colonnes non-adjacentes, et le ou les autres étant commun à y2 lignes non-adjacentes, x2 étant un entier compris entre 1 et (N/2+1) et y2 un entier compris entre 1 et (M/2+1).

6. Procédé selon l'une quelconque des revendications 1 à 5, caractérisé en ce qu'il comporte une étape consistant à commander le transfert d'une valeur binaire entre un processeur et un autre qui lui est adjacent.

7. Procédé selon l'une quelconque des revendications 1 à 6, caractérisé en ce qu'il comporte une ou plusieurs étapes successives de commande simultanée d'une famille de lignes L(bl x kl + rl), paramétrée par kl, bl étant un entier fixe compris entre 2 et (M/2+1), kl étant un nombre entier compris entre 0 et le quotient de la division euclidienne de M par bl et rl étant un entier compris entre 1 et bl pouvant varier d'une étape de calcul à la suivante, et/ou d'une famille de colonnes C(bc x kc + rc), paramétrée par kc, bc étant un entier fixe compris entre 2 et (N/2+1), kc étant un nombre entier compris entre 0 et le quotient de la division euclidienne de N par bc et rc étant un entier compris entre 1 et bc pouvant varier d'une étape de calcul à la suivante.

8. Procédé selon l'une quelconque des revendications 1 à 7, caractérisé en ce qu'il est appliqué à des blocs de processeurs, ces blocs constituant un pavage du réseau de processeurs.

9. Procédé selon la revendication 8, caractérisé en ce qu'il consiste à calculer un résultat dans un processeur de chaque bloc, ces blocs étant le pavage du réseau de processeur par des blocs de taille 1 x bl, bc x 1 ou bc x bl.

10. Procédé selon la revendication 9, utilisant des étapes successives afin de calculer un résultat dans plusieurs processeurs de chacun des blocs 1 x bl, bc x 1 ou bc x bl pavant le bloc N x M.

11. Procédé selon l'une des revendications 9 et 10, caractérisé en ce qu'il consiste à utiliser simultanément pour chaque bloc et au cours d'une même étape de calcul les fonctionnalités de plusieurs processeurs.

12. Application d'un procédé selon l'une quelconque des revendications 1 à 11 à un réseau bidimensionnel périodique de mémorisation et de traitement d'images composées de pixels binaires, dont la maille périodique constitue un processeur booléen associé à au moins un pixel, ce processeur comportant lui-même au moins un registre à décalage unidirectionnel comprenant au moins trois points mémoires.
